(19) Europäisches Patentamt

European Patent Office

Office européen des brevets

(11) Publication number: **0 051 621**
**B1**

(12) **EUROPEAN PATENT SPECIFICATION**

(45) Date of publication of patent specification: **17.10.84**

(21) Application number: **81901202.2**

(22) Date of filing: **12.05.81**

(86) International application number:
**PCT/SE81/00142**

(87) International publication number:
**WO 81/03336 26.11.81 Gazette 81/28**

(51) Int. Cl.³: **C 10 L 5/00, F 23 K 1/00**

(54) **A PROCESS OF PREPARING A FUEL.**

(30) Priority: **13.05.80 SE 8003586**

(43) Date of publication of application:
**19.05.82 Bulletin 82/20**

(45) Publication of the grant of the patent:
**17.10.84 Bulletin 84/42**

(84) Designated Contracting States:
**AT CH DE FR LI LU NL SE**

(56) References cited:
**SE-A-79 056 230**
**US-A-3 064 592**
**US-A-3 482 534**
**US-A-3 859 935**
**US-A-3 938 965**

(73) Proprietor: **ebe ENERGIBRÄNSLE AB**
**22 Kvarngatan**
**S-502 44 Borås (SE)**

(72) Inventor: **HULTEN, Göran**
**22 Kvarngatan**
**S-502 44 Borås (SE)**
Inventor: **GABRIELII, Sten**
**3 Sörmlandsgatan**
**S-502 65 Borås (SE)**

(74) Representative: **Onn, Thorsten et al**
**AB Stockholms Patentbyra Zacco & Bruhn P.O.**
**Box 3129**
**S-103 62 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a process of preparing a fuel, especially for use in cyclone burners (turbulence burners).

Wood and firewood have been used for a long time as fuel both in industry and households. The firewood has been used as cut to various sizes, such as logs (split billets) and chips, and attempts have also been made to utilize such waste products as sawdust for fuel. Investigations have shown that there will be a great excess of hardwood in the form of low-grade timber from thinned and cleared areas and such as is called thicket. Firing of this wood in the form of chips, so-called green chips, has been started but does not appear to lead to any market for the green chips (chips of new wood material).

It is known from US—A—3 482 534 that it is possible to burn sander dust from a plywood mill, this dust being hazardous, in the apparatus described in US—A—3 482 534. The dust contains a major proportion of very fine material and cannot be used in normal cyclone burners.

It is known from US—A—3 064 592 that wood bark can be ground in a first hammer mill then passed to a press in which the results of the first grinding are compressed to extract liquid therefrom to produce an pressed bark material of 50 to 70% of a bone dry condition, i.e. a bark of 30 to 50% moisture content. This bark is then passed to a second moist grinding step to which air (which "may be warmed and dried in preparation for its passage through the mill") is introduced. The second grinding step is thus carried out on a relatively moist (30 to 50% water content) bark. The product of the second grinding is then separated from the air stream and fed to a furnace.

Now it has surprisingly been found that wood powder can be combusted with a very good effect in cyclone burners similar to those now used in oil combuster, the wood powder being prepared in a process, which is characterized in that the wood is ground in a first step to a powder having a particle size of up to 15 mm, preferably 12 mm, as e.g. 5 mm, that the resulting powder is dried to a moisture content of maximum 15%, preferably maximum 10%, and that this dried powder is ground in a second step to an average particle size of 100—900 $\mu$m, preferably 300—700 $\mu$, and a moisture content of up to 8%, as e.g. 3—5%. The wood is preferably in the form of chips as starting material for the grinding process. The fuel can be used in boilers, hot water boilers, hot air boilers, internal combustion engines and the like, in which internal combustion engines the fuel preferably has an average particle size of 200—400 $\mu$.

The process is preferably carried out in such a way that chips conveyed to a plant for carrying out the process or produced on the spot in a way known per se are ground after storage or directly e.g. in a rotary cutter or hammer mill. The chips which can be of any type of wood, e.g. hardwood, such as birch, aspen, or softwood, such as spruce, pine or mixtures thereof, have usual chip size, e.g. a thickness of about 5 mm and a length of about 30 mm. The moisture content of the chips is e.g. in the range of 30—65%. It is suitable if the moisture content of the chips is about 30%, which can be achieved by stacking in the forest before transport to the milling plant or by pre-drying in an automatic stack, where the chips are stored before grinding. Drying energy is saved by this lower moisture content.

The mill for this first grinding is preferably provided with magnetic separator and separators for heavier material than chips, such as coarse sand, glass, nonmagnetic metals, etc. At this first grinding operation chips are ground to a powder having a particle size of up to 15 mm, material having a larger particle size being returned to the mill and with a particle size of below 15 mm being transferred to a drying plant, optionally with an intermediate storage container for balancing the production in the mill and the drying plant.

The powder from the first grinding process has about the same moisture content as incoming chips, i.e. about 30—65%. Drying can e.g. take place in a drum with e.g. hot air, flue gases and optionally supplied secondary air, and the flue gases can derive from a boiler fired with wood powder. The boiler need only consist of a burner and a combustion chamber but should be so well insulated that the heat losses will be as small as possible. If the ground powder has a minimum moisture content of 30% it is so wet that no problems will arise with explosion or ignition, even if the flue gases contain glowing or burning particles at the inlet of the drying drum. It is suitable to adjust the temperature of the flue gases (the drying air) to 550—850°C depending i.a. on the moisture content and the particle size of the starting material. For obtaining as good an efficiency as possible the temperature of the outgoing gases should be as low as possible, e.g. down to about 55°C. It is possible to control the whole drying process by means of a thermostat.

The flue gas after the drying apparatus can be purified and rid of i.a. from dust and other solid particles, e.g. by means of cyclones and/or by cleaning with water (scrubber), automatic heat recovery taking place. In view of the explosion risk of this dust and its flammability blow out panels and automatic fire extinguishing equipment should be arranged in connection with these cyclones, and in addition, at all exposed places in the whole process.

The dried powder from the drying plant can be stored in containers so that a buffer is obtained for the following grinding step. The mills used in this second grinding step can be analogous to those used in the first grinding step but the sieve apertures are smaller. Suitable sieve apertures are such that particles having a size of up to 0.700 mm are obtained; if the powder is intended for internal combustion engines the sieve apertures should be chosen smaller, say up to 0.300 mm. The powder is dried more by the friction heat generated in the mills and a "dry" powder (wood powder) with a moisture content of about 2—5% is obtained. The powder is transported to a container for finished powder from this second grinding step.

The finished powder can of course be used directly in a plant lying close to the place of the powder preparation for firing e.g. of steam boilers and hot water boilers. However, it is easily transportable e.g. in tank trucks. In this way it is possible to place the plant for the preparation of wood powder on a spot suitable for this production while the place of consumption is arranged more suitably for the use, i.e. e.g. for the production of electric power and heat for heating purposes.

Mills, driers and transport means known per se can be used. The transport means can e.g. be belt conveyors and chain conveyors, but it must be considered that explosive mixtures of wood powder and air should be avoided. Pneumatic systems can be used considering this and screw conveyors can supplement other systems. Heat recovery is of course arranged in so far as this is economical.

The combustion of the wood powder i.a. takes place in such a way that air and powder are mixed by the aid of turbulence and form a dust-cloud which can be completely combusted, the combustion taking place substantially similarly to that in an oil burner. It is suitable to ignite the dust-cloud by means of a pilot burner for oil or gas or a special incandescent filament.

It is possible to use such wood powder burners in boilers now fired by oil. You can check and control the combustion in the same way as with oil. There will be no glowing mass and small amounts of ashes are obtained. The problems associated with firing in boilers with stoker or grate are avoided.

The product prepared according to this invention has a good storage ability; thus it will not absorb moisture, is not biologically degraded and will provide a good efficiency at combustion. Such high flame temperatures as 1200—1600°C can be obtained in combustion. Only negligible quantities of toxic substances, such as polycyclic aromatic hydrocarbons, will asrise in the flue gases as distinguished from usual wood or chips firing.

Thanks to the good possibilities of transporting the powder this can replace oil, if the transport ways from the place of the preparation to the place of consumption will not be too long. Moreover, it has the advantage over oil and carbon that the flue gases are not acidifying and that acid precipitation does not occur.

As the size of a burner substantially decides the maximum particle size used therein the average particle size of powders to be delivered to a certain plant should be adjusted according to the capacity of this plant. Now it appears as if average particle sizes of up to 700 $\mu$m are suitable. In the lower average particle size range of 100—300 $\mu$m there are uses in small burners and above all in internal combustion engines. It is also evidident that the resulting powder contains very small particles as well as bigger ones as only too big particles are separated. It is also clear that the wood can consist of other things than chips. Thus, the starting material can be sawdust cutter shavings and waste material from wood working plants.

## Claims

1. A process of preparing a fuel, especially for use in cyclone burners, characterized in that wood is ground in a first step to a powder with a particle size of up to 15 mm, that the resulting powder is dried to a moisture content of maximum 15%, and that this dried powder is ground in a second step to an average particle size of 100—900 $\mu$m and a moisture content of less than 8%.

2. The process of claim 1, characterized in that the moisture content is maximum 10% after drying prior to the second grinding operation.

3. The process of claim 1 or 2, characterized in that the moisture content after the second grinding operation is 2—5%.

4. The process of any one of claims 1—3, characterized in that the average particle size of the resulting fuel is 300—700 $\mu$m.

5. The process of any one of claims 1—3, characterized in that the average particle size of the resulting fuel is 200—400 $\mu$m.

6. The use of wood powder having an average particle size of 100—900 $\mu$m, preferably below 700 $\mu$m, and having a moisture content of less than 8% and prepared according to the process of any of the claims 1—5 as fuel in boilers, hot water boilers, hot air boilers, internal combustion engines and the like.

7. The use according to claim 6, wherein the powder has a bulk density of maximum 350 kg/m³.

## Revendications

1. Procédé de préparation d'un combustible, destiné en particulier à être utilisé dans des brûleurs à cyclone, caractérisé en ce que du bois est broyé, dans une première opération, à une poudre à grosseur de particule allant jusqu'à 15 mm, que la poudre obtenue est séchée à une teneur en humidité de 15% maximum, et que cette poudre séchée est broyée, dans une deuxième opération, à une grosseur moyenne de particule de 100 à 900 $\mu$m et à une teneur en humidité de moins de 8%.

2. Procèdè selon la revendication 1, caractérisé en ce que la teneur en humidité est de 10% au maximum après séchage et préalablement à la deuxième opération de broyage.

3. Procédé selon l'une des revendications 1 et 2, caractérisé en ce que la teneur en humidité après la deuxième opération de broyage est de 2 à 5%.

4. Procédé selon une quelconque des revendications 1 à 3, caractérisé en ce que la grosseur moyenne de particule du combustible obtenu est de 300 à 700 $\mu$m.

5. Procédé selon une quelconque des revendications 1 à 3, caractérisé en ce que la grosseur moyenne de particule du combustible obtenu est de 200 à 400 $\mu$m.

6. Utilisation de poudre de bois préparée conformément au procédé selon une quelconque des revendications 1 à 5 et présentant une grosseur moyenne de particule de 100 à 900 $\mu$m, de préférence moins de 700 $\mu$m, et une teneur en humidité de moins de 8%, en tant que combustible dans des chaudières de vapeur, des chaudières d'eau chaude, des chaudières d'air chaud, des moteurs à combustion interne, etc.

7. Utilisation selon la revendication 6, la poudre présentant une densité apparente de 350 kg/m³ au maximum.

## Patentansprüche

1. Verfahren zur Herstellung eines Brennstoffs, insbesondere zur Anwendung in Zyklonbrennern, dadurch gekennzeichnet, dass Holz in einer ersten Stufe zu einem Pulver mit einer Partikelgrösse von bis zu 15 mm gemahlt wird, dass das erhaltene Pulver zu einem Feuchtigkeitsgehalt von maximal 15% getrocknet wird und dass dieses getrocknete Pulver in einer zweiten Stufe zu einer durchschnittlichen Partikelgrösse von 100—900 $\mu$m und einem Feuchtigkeitsgehalt von weniger als 8% gemahlt wird.

2. Verfahren nach Anspruch 1, dadurch gekennzeichnet, dass der Feuchtigkeitsgehalt nach Trocknung vor dem zweiten Mahlvorgang maximal 10% ist.

3. Verfahren nach Anspruch 1 oder 2, dadurch gekennzeichnet, dass der Feuchtigkeitsgehalt nach dem zweiten Mahlvorgang 2—5% ist.

4. Verfahren nach einem der Ansprüche 1—3, dadurch gekennzeichnet, dass die durchschnittliche Partikelgrösse des erhaltenen Brennstoffs 300—700 $\mu$m ist.

5. Verfahren nach einem der Ansprüche 1—3, dadurch gekennzeichnet, dass die durchschnittliche Partikelgrösse des erhaltenen Brennstoffs 200—400 $\mu$m ist.

6. Verwendung des Holzpulvers mit einer durchschnittlichen Partikelgrösse von 100—900 $\mu$m, vorzugsweise unter 700 $\mu$m, und mit einem Feuchtigkeitsgehalt von weniger als 8% und gemäss dem Verfahren eines der Ansprüche 1—5 zubereitet, als Brennstoff in Dampfkesseln, Heisswasserkesseln, Heissluftkesseln, Verbrennungsmotoren und dergleichen.

7. Verwendung nach Anspruch 6, wo das Pulver eine Rohdichte von maximal 350 kg/m³ hat.